# EUROPEAN PATENT SPECIFICATION

(11) **EP 2 353 930 B1**
(45) Date of publication and mention of the grant of the patent: **25.06.2014**
(21) Application number: 10151814.0
(22) Date of filing: 27.01.2010
(51) Int. Cl.: B60N 2/30

(54) **An integrated child seat**
Integrierter Kindersitz
Siège enfant intégré

(43) Date of publication of application: 10.08.2011
(73) Proprietor: Tofas Turk Otomobil Fabrikasi Anonim Sirketi, 16369 Bursa (TR)
(72) Inventor: Ider, Kemal, ANKARA (TR); Kayiran, Ali Murat, ANKARA (TR); Ciftci, Ozgun, 16369, BURSA (TR)
(74) Representative: Dericioglu Kurt, Ekin

(56) References cited:
- EP-A1- 0 666 194
- DE-A1- 4 328 493
- JP-A- 10 016 617
- US-A- 5 997 083

## Description

### Field of the Invention

The present invention relates to an integrated child seat which can be adjusted to different height steps.

### Background of the Invention

Child seats are present in motor vehicles in order that children up to 12 years old travel securely. Child seats can be connected onto a car seat subsequently or they can be integrated to car seats whereon adults sit. In integrated systems, a normal seat whereon adults sit is converted into a child seat by means of a mechanism.

Owing to the fact that 4-12 age-group children using child seats integrated to car seats have different height and weight values it is not very healthy to use a child seat in one step. Therefore, integrated child seat mechanisms which can be adjusted in more than one step are needed.

The European patent document no. EP0286542 discloses an integrated child seat of one step. It is passed to a child seat position by raising the cushion located on the front part of the car seat. A fixed four-bar mechanism is used in the said patent document

The United States patent document no. US5997083 discloses a seat which is used as child seat by raising the rear part of the seat cushion. A sliding four-bar mechanism is used in the child seat mechanism.

The European patent document no. EP0666194 discloses an integrated child seat system which can be adjusted to multiple steps. The seat cushion is used in different steps by fixing one of the joints which are used in the integrated child seat, at different locations. The mechanism raises the back part of the seat cushion.

The mechanism disclosed in the United States patent document no. US20080088164 consists of two overlapped four-bar mechanisms which enable adjustment in two steps. In order to adjust the child seat to a first step the first four-bar mechanism whereas in order to adjust it to a second step the first and the second four-bar mechanisms are need to be brought to an open position.

### Summary of the Invention

The objective of the present invention is to realize an integrated child seat which can be adjusted to different height steps.

Another objective of the invention is to realize an integrated child seat which enables the children within a wider range of height and weight to travel safely and comfortably.

### Detailed Description of the Invention

"An integrated child seat" realized to fulfill the objectives of the present invention is illustrated in the accompanying figures, in which:

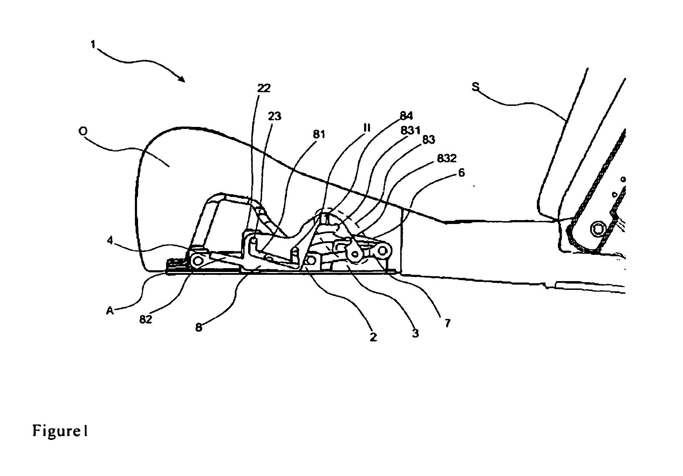

Figure 1 is the view of the inventive integrated child seat in normal position whereon adults sit

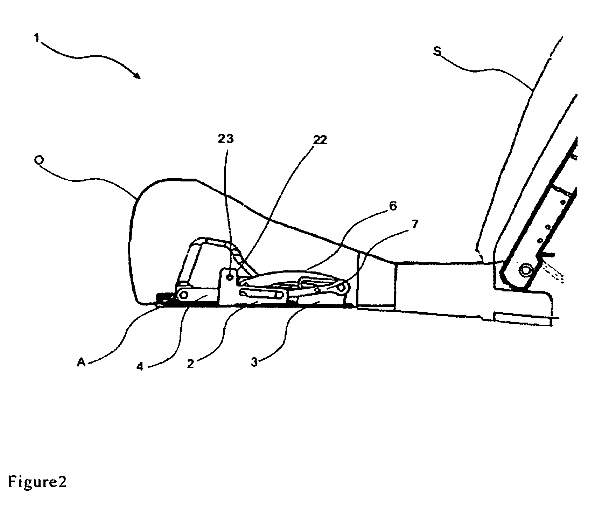

Figure 2 is the view of the inventive integrated child seat in normal position whereon adults sit and the adjusting lever being removed.

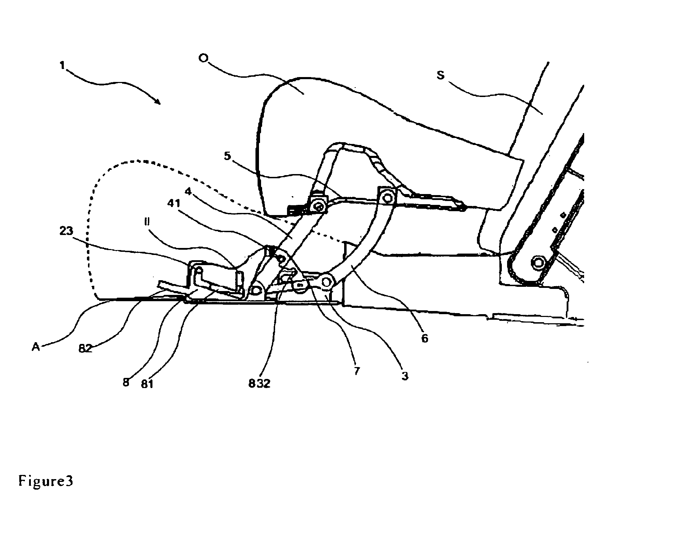

Figure 3 is the view of the inventive integrated child seat at the first step height.

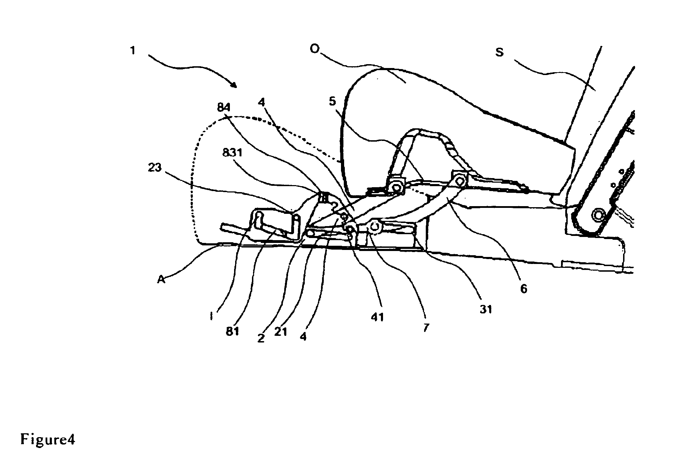

Figure 4 is the view of the inventive integrated child seat at the second step height.

The parts illustrated in the figures are individually numbered where the numbers refer to the following:
1. Child seat
2. Front plate
   21. Channel
   22. Projection
   23. Pin
3. Rear plate
   31. Channel
4. Front bar
   41. Pin
5. Support sheet
6. Rear bar
7. Lower bar
8. Adjusting lever
   81. Channel
   82. Handle
   83. Extension
      831. First step slot
      832. Second step slot
   84. Step transition
O: Seat cushion
S: Back cushion

The integrated child seat (1) comprises:
- at least one seat cushion (O);
- at least one back cushion (S);
- at least one front plate (2) which is located below the at least one seat cushion (O), fixed to the vehicle chassis (A), having at least one projection (22) and at least one pin (23) at the end part of the projection (22) and on which there is a channel (21);
- at least one rear plate (3) which is located at the rear side of the front plate (2) on the side towards the back cushion (S), fixed to the vehicle chassis (A), parallel to the front plate (2) and on which there is a channel (31);
- at least one front bar (4), one end of which is movable inside the channel (21) of the front plate (2) and having at least one pin (41);
- at least one support sheet (5) whereto the other end of the front bar (4) is connected and which bears the seat cushion (O);
- at least one rear bar (6), one end of which is connected to the support sheet (5), the other end of which is movable inside the channel (31) of the rear plate (3);
- at least one lower bar (7), one end of which is connected to the one end of the front bar (4) and the other is connected to the other end of the rear bar (6), the end connected to the front bar (4) is linearly movable inside the channel (21) of the front plate (2), the end connected to the rear bar (6) is linearly movable inside the channel (31) of the rear plate (3);
- at least one adjusting lever (8) having at least one channel (81) in which the pin (23) located on the front plate (2) may move at one end thereof and rotatingly connected to the lower bar (7) at the other end thereof, having at least one extension (83) which is located on the part of the adjusting lever (8) close to the back cushion (S), connected to the lower bar (7) from its end and has a curl, and having a slot (831) which is located on the extension (83), whereto the pin (41) present on the front bar (4) fits, that enables the seat cushion (O) to be locked in a desired step;
- at least one spring (not shown in the figures) which pulls the adjusting lever (8) towards the vehicle chassis (A) and
- at least one spring (not shown in the figures) which pulls the lower bar (7) towards the back cushion (S).

Four-bar mechanism is formed by connecting the front bar (4) to the lower bar (7) from one end and to the support sheet (5) from the other end thereof, the support sheet (5) to the front bar (4) from one end and to the rear bar (6) from the other end thereof, the rear bar (6) to the support sheet (5) from one end and to the lower bar (7) from the other end thereof. Junctures of the front bar (4) and the rear bar (6) with the lower bar (7) move forwards and backwards inside the channel (21) of the front plate (2) and the channel (31) of the rear plate (3).

The adjusting lever (8) comprises:
- at least one channel (81) in which the pin (23) moves;
- at least one handle (82) over which the user applies pulling force, which is located on the part of the adjusting lever (8) close to the driver's panel;
- at least one extension (83) which is located on the part of the adjusting lever (8) close to the back cushion (S), connected to the lower bar (7) from its end and has a curl;
- at least two slots (831,832) which are located on the extension (83), whereto the pin (41) present on the front bar (4) fits, number of which is determined according to the step and the height at which the seat cushion (O) is desired to stop and
- at least one step transition (84) in order that the pin (41) present on the front bar (4) lifts up the adjusting lever (8) upon contacting the adjusting lever (8).

In the preferred embodiment of the invention, the seat cushion (O) is fixed at two different steps by the two slots (831,832) which are located on the extension (83). The extension (83) is preferably in the form of a C. In order that the pin (41) does not exit from the slots (831,832) on the extension (83) under load, a geometry is given to the slots (831,832) such that the pin force having an impact upon them will rotate the adjusting lever (8) in locking direction. Upon the number of slots (831,832) on the extension (83) increases, the number of steps at which the seat cushion (O) is fixed in different heights increases.

In normal position of the vehicle seat whereon adults sit; the junctures of the front bar (4) and the lower bar (7) are in a position that is lean to the end of the channel (21) on the front plate (2) close to the back cushion (S), the juncture of the rear bar (6) with the lower bar (7) is in a position that is lean to the end of the channel (31) on the rear plate (3) close to the back cushion (S). Whereas the pin (23) located at the projection (22) of the front plate (2) is present on the left top tip (I) of the U-shaped channel (81). The pin (23) is enabled to remain on the left top tip (I) by means of a spring one end of which is connected to the vehicle chassis (A) and the other end of which is connected to the adjusting lever (8).

When the child seat is desired to be brought to the first step, a first motion is given to the seat cushion (O). The first motion actuates the front bar (4) the support sheet (5) and the rear bar (6) upwards relative to the vehicle chassis (A). During the motion, the junctures of the front bar (4) and the rear bar (6) with the lower bar (7) are in the end of the channel (21) on the front plate (2) and the channel (31) on the rear plate (3) close to the back cushion (S).

When the pin (41) passes the step transition (84) of the adjusting lever (8) with the movement of the front bar (4), the rear bar (6) and the support sheet (5) contacts it from the lower part thereof and the adjusting lever (8) makes a move upwards. The seat cushion (O) is fixed at the first step and at the height desired with the pin (41) being locked in the slot by means of the adjusting lever (8) lifting up, the pin (41) fitting to the first step slot (831) and the spring pulling the adjusting lever (8) down. The pin (23) which is located on the projection (22) at the first step is present on the left top tip (I) of the channel (81) that is located on the adjusting lever (8). Whereas the junctures of the front bar (4) and the rear bar (6) with the lower bar (7) keep their first position inside the channel (21,31).

When the seat cushion (O) is desired to be brought to the second step the adjusting lever (8) is lifted up, pulled forwards from the handle (82) and the pin (23) is enabled to move inside the channel (81). The lower bar (7) moves forwards inside the channel (21) on the front plate (2) and the channel (31) on the rear plate (3) synchronously with the movement of the pin (23) inside the channel (81). The lower bar (7) moves from the junctures thereof with the front bar (4) and the rear bar (6).

After the adjusting lever (8) is lifted up and pulled forwards subsequently, the adjusting lever (8) moves upwards with the accompanying motion of the pin (23) inside the channel (81) and the pin (41) of the front bar (4) gets free from the first step slot (831). In order that the pin (41) can get free from the first step slot (831), an inclined structure is provided to the channel (81) of the adjusting lever (8).

Upon the forward movement of the lower bar (7) inside the channel (21,31) is completed, the adjusting lever (8) is pulled downwards by the spring. Upon the downward movement of the adjusting lever (8), the pin (41) fits to the second step slot (832) and the seat cushion (O) is brought to the second step height.

When the seat cushion (O) is in the second step, the pin (23) is present on the right top tip (II) of the channel (81). The junctures of the lower bar (7) with the front bar (4) and the rear bar (6) are present on the part of the channels (21,31) close to the driver's panel. The seat cushion (O) is in a lower position in the second step in comparison with the first step.

When the seat is desired to be brought to the normal position whereon adults sit from the child seat position; the spring, which pulls the lower bar (7) towards the back cushion (S) upon the adjusting lever (8) is lifted up, returns the integrated child seat (1) to the normal position whereon adults sit.

In the preferred embodiment of the invention, the channel (81) located on the adjusting lever (8) is preferably inclined in relation to the vehicle chassis (A) and it is U-shaped. When the step number of the seat cushion (O) is desired to be increased, the number of top tip (I,II) whereto the pin (23) will fit is increased. Within the scope of this basic concept, it is possible to develop various embodiments of the integrated child seat (1). The invention is not be limited to the examples described herein; it is according to the claims.

## Claims

1. Integrated child seat (1) comprising at least one seat cushion (O) and at least one back cushion (S) comprising:
- at least one front plate (2) which is located below the at least one seat cushion (O), fixed to the vehicle chassis (A), having at least one projection (22) and at least one pin (23) at the end part of the projection (22) and on which there is a channel (21);
- at least one rear plate (3) which is located at the rear side of the front plate (2) on the side towards the back cushion (S), fixed to the vehicle chassis (A), parallel to the front plate (2) and on which there is a channel (31);
- at least one front bar (4), one end of which is movable inside the channel (21) of the front plate (2) and having at least one pin (41);
- at least one support sheet (5) whereto the other end of the front bar (4) is connected and which bears the seat cushion (O);
- at least one rear bar (6), one end of which is connected to the support sheet (5), the other end of which is movable inside the channel (31) of the rear plate (3);
- at least one lower bar (7), one end of which is connected to the one end of the front bar (4) and the other is connected to the other end of the rear bar (6), the end connected to the front bar (4) is linearly movable inside the channel (21) of the front plate (2), the end connected to the rear bar (6) is linearly movable inside the channel (31) of the rear plate (3);
- at least one adjusting lever (8) having at least one channel (81) in which the pin (23) located on the front plate (2) may move at one end thereof and rotatingly connected to the lower bar (7) at the other end thereof, having at least one extension (83) which is located on the part of the adjusting lever (8) close to the back cushion (S), connected to the lower bar (7) from its end and has a curl , and having a slot (831) which is located on the extension (83), whereto the pin (41) present on the front bar (4) fits, that enables the seat cushion (O) to be locked in a desired step by the locking of the pin (41) to the said adjusting lever (8);
- at least one spring which pulls the adjusting lever (8) towards the vehicle chassis (A) and
- at least one spring which pulls the lower bar (7) towards the back cushion (S).

2. Integrated child seat (1) according to claim 1, **characterized by** the adjusting lever (8) having
- at least one handle (82) over which the user applies pulling force which is located on the part of the adjusting lever (8) towards the front side of the seat;
- at least two slots (831,832) which are located on the extension (83), whereto the pin (41) present on the front bar (4) fits;
- at least one step transition (84) in order that the pin (41) present on the front bar (4) lifts up the adjusting lever (8) upon contacting the adjusting lever (8).

3. Integrated child seat (1) according to Claim 1, **characterized by** the channel (81) of the adjusting lever (8) being U-shaped and inclined in relation to the vehicle chassis.

4. Integrated child seat (1) according to Claim 1 or 2, **characterized by** the extension (83) having a C-shaped curl.

5. Integrated child seat (1) according to claim 2, **characterized by** the pin (41) contacting the adjusting lever (8) with the upward movement of the front bar (4), the rear bar (6) and the support sheet (5) and actuating the adjusting lever (8) upwards when the seat cushion (O) is desired to be brought to a first step.

6. Integrated child seat (1) according to Claim 5, **characterized by** the adjusting lever (8) being lifted upwards at first and then pulled forwards when the seat cushion (O) is desired to be brought from the first step to a second step.

7. Integrated child seat (1) according to Claim 6, **characterized by** the pin (23) moving inside the channel (81) by the motion given to the adjusting lever (8).

8. Integrated child seat (1) according to Claim 7, **characterized by** the lower bar (7) moving inside the channel (21) of the front plate (2) and the channel (31) of the rear plate (3) simultaneously with the movement of the pin (23) inside the channel (81).

9. Integrated child seat (1) according to Claim 6, **characterized by** the pin (41) getting free from the first step slot (831) upon the adjusting lever (8) being lifted upwards and pulled forwards by the movement of the pin (23) inside the channel (81).

## Patentansprüche

1. Integrierter Kindersitz (1) mit mindestens einem Sitzpolster (O) und mindestens einem Rückenpolster (S) **umfassend;**
mindestens eine Frontplatte (2), welche unter mindestens einem Rückenpolster (O) angeordnet und am Fahrzeugchassis (A) befestigt ist und mindestens einen Vorsprung (22) sowie mindestens einen Bolzen (23) an einem Ende der Vorsprung (22) aufweist und auf welcher sich ein Kanal (21) befindet;
- mindestens eine Rückenplatte (3), welche auf der Rückseite der Frontplatte (2) auf der Seite gegen das Rückenpolster (S) angeordnet und parallel zu der Frontplatte (2) an Fahrzeugchassis (A) befestigt ist und auf welcher sich ein Kanal (31) befindet;
- mindestens eine vordere Stange (4), deren ein Ende innerhalb des Kanals (21) der Frontplatte (2) beweglich ist und mindestens einen Bolzen (41) aufweist;
- mindestens ein Auflageblech (5), woran das andere Ende der Frontplatte (4) angeschlossen ist und welches das Sitzpolster (O) trägt;
- mindestens eine hintere Stange (6), deren ein Ende mit dem Auflageblech (5) verbunden ist und deren andere Ende innerhalb des Kanals (31) der Rückenplatte (3) beweglich ist;
- mindestens eine untere Stange (7), deren ein Ende mit dem Ende der vorderen Stange (4) und das andere Ende mit dem anderen Ende der hinteren Stange verbunden ist, wobei das mit der vorderen Stange verbundene Ende innerhalb des Kanals (21) der Frontplatte (2) geradlinig bewegbar ist und wobei das mit der hinteren Stange (6) verbundene Ende innerhalb des Kanals (31) der Rückenplatte (3) geradlinig bewegbar ist,
- mindestens einen Einstellhebel (8), der mindestens einen Kanal (81) aufweist, in welcher der auf der Frontplatte (2) angeordnete Bolzen (23) an einem Ende davon bewegen kann und mit der unteren Stange (7) an dem anderen Ende davon drehend verbunden ist und mindestens eine Verlängerung (83) aufweist, welche auf dem nah zu dem Rückenpolster (S) liegenden Teil des Einstellhebels (8) angeordnet ist und mit der unteren Stange (7) an ihrem Ende verbunden ist und eine Locke aufweist und eine Aussparung (831) hat, welche auf der Verlängerung angeordnet ist, woran der auf der vorderen Stange (4) befindliche Bolzen (41) befestigt ist,
- mindestens eine Feder, welche den Einstellhebel (8) gegen das Fahrzeugchassis (A) anzieht und
- mindestens eine Feder, welche die untere Stange (7) gegen das Rückenpolster (S) anzieht.

2. Integrierter Kindersitz (1) nach Anspruch 1, **gekennzeichnet durch** den Einstellhebel (8), der aufweist,
- mindestens einen Griff (82), über den der Anwender einen Zugkraft anbringt, welcher im Bereich des Einstellhebels (8) gegen die vordere Seite des Sitzes angeordnet ist;
- mindestens zwei Aussparungen (831, 832), die auf der Verlängerung (83) angeordnet ist, an die der sich auf der vorderen Stange (4) befindende Bolzen (41) befestigt ist,
mindestens einen Schritt-Übergang (84), damit der sich auf der vorderen Stange befindende Bolzen (41) nach Kontaktierung den Einstellhebel (8) den Einstellhebel (8) anhebt.

3. Integrierter Kindersitz (1) nach Anspruch 1, **gekennzeichnet durch** den Kanal (81) des Einstellhebels (8), der U-förmig und in Bezug auf das Fahrzeugchassis geneigt ist;

4. Integrierter Kindersitz (1) nach Anspruch 1 oder 2, **gekennzeichnet durch** die Verlängerung (83), die eine C-förmige Locke aufweist.

5. Integrierter Kindersitz (1) nach Anspruch 2, **gekennzeichnet durch** den Bolzen (41), der **durch** die ansteigende Bewegung der vorderen Stange (4), der hinteren Stange (6) und des Auflageblechs (5) den Einstellhebel (8) berührt und den Einstellhebel betätigt, falls gewünscht wird, dass das Rückenpolster (O) in eine erste Stellung gebracht wird.

6. Integrierter Kindersitz (1) nach Anspruch 5, **gekennzeichnet durch** den Einstellhebel (8), der zunächst aufwärts angehoben und dann nach vorne gezogen wird, wenn gewünscht wird, dass das Sitzpolster (O) von einer ersten Stellung zu einer zweiten Stellung gebracht wird.

7. Integrierter Kindersitz (1) nach Anspruch 6, **gekennzeichnet durch** den Bolzen (23), der sich **durch** die dem Einstellhebel (8) gegebene Bewegung innerhalb des Kanals (81) bewegt.

8. Integrierter Kindersitz (1) nach Anspruch 7, **gekennzeichnet durch** die untere Stange (7), die sich innerhalb des Kanals (21) der Frontplatte (2) sowie des Kanals (31) der Rückenplatte (3) **durch** die Bewegung des Bolzen (23) innerhalb des Kanals (81) gleichzeitig bewegt.

9. Integrierter Kindersitz (1) nach Anspruch 6, **gekennzeichnet durch** den Bolzen (41), der nach der nach oben gerichtete Anhebung und der nach der vom gerichteter Anziehung des Einstellhebels **durch** die Bewegung des Bolzen (23) innerhalb des Kanals (81) aus der für die erste Stellung vorgesehene Aussparung (831) freigesetzt wird.

## Revendications

1. Un siège intégré pour enfant (1), comportant au moins un coussin du siège (O) et au moins un coussin de dossier (S) comportant:
- au moins une plaque avant (2) placé sous au moins un coussin du siège (O), fixé au châssis du véhicule (A), possédant au moins une projection (22) et au moins une épingle (23) sur la partie terminale de la projection (22) et sur laquelle se trouve un canal (21),
- au moins une plaque arrière (3) placée à la partie proche au coussin de dossier (S) sur la partie arrière de la plaque avant (2), fixée au châssis du véhicule (A), parallèlement à la plaque avant (2) et sur laquelle se trouve un canal (31),
- au moins une tige avant (4) dont l'une de ses extrémités se trouve sur la plaque avant (2) et pouvant se déplacer à l'intérieur du canal (21) d'au moins une épingle (41),
- au moins une tôle de support (5) reliée à l'autre extrémité de la tige frontale (4) et soutenant le coussin du siège (O),
- au moins une tige arrière (6) dont l'une de ses extrémités est reliée à la tôle de support (5) et l'autre extrémité se déplaçant à l'intérieur du canal (31) de la plaque arrière (3),
- au moins une tige inférieure (7) dont une extrémité est reliée à la tige avant (4) et l'autre à la tige arrière (6), et dont son extrémité reliée à la tige arrière (6) pouvant déplacer linéairement à l'intérieur du canal (31) de la plaque arrière (3) et son extrémité reliée à la tige avant (4) pouvant se déplacer dans le canal (21) de la plaque avant (2),
- au moins un levier de réglage (8) possédant au moins un canal (81) dans lequel l'épingle (23) placée sur la plaque avant (2) pouvant se déplacer sur l'une de ses extrémités et étant reliée à la tige inférieure (7) de l'autre extrémité, possédant au moins un logement (831) placé sur l'extension (83) à laquelle s'adapte l'épingle (41) se trouvant sur la tige avant (4), permettant le coussin du siège (O) d'être verrouillé au pas désiré par verrouillage de l'épingle (41) audit levier de réglage (8),
- au moins une extension (83) placée sur une partie du levier de réglage (8) proche du coussin de dossier (S), reliée à la tige inférieure de son extrémité et possédant une boucle,
- au moins un ressort de rappel retirant la tige d'ajustement (8) vers le châssis du véhicule (A), et
- au moins un ressort de rappel retirant la tige inférieure (7) vers le coussin de dossier (S).

2. Un siège intégré pour enfant (1) selon la revendication 1, **caractérisé par** un levier de réglage (8) comportant
- au moins une poignée (82) sur laquelle l'utilisateur applique une force de traction se trouvant sur une partie du levier de réglage (8) vers le côté frontal du siège,
- au moins une transition de pas (84) afin que l'épingle (41) présente sur la tige avant (4) lève le levier de réglage sur le contact avec le levier de réglage (8).

3. Un siège intégré pour enfant (1) selon la revendication 1, **caractérisé par** le canal (81) du levier de réglage (8) en forme "U" et incliné par rapport au châssis du véhicule.

4. Un siège intégré pour enfant (1) selon la revendication 1 ou 2, **caractérisé par** l'extension (83) comportant une boucle en forme "C".

5. Un siège intégré pour enfant (1) selon la revendication 2, **caractérisé par** l'épingle (41) touchant au levier de réglage (8) par le mouvement de la tige avant (4), la tige arrière (6), et la plaque de support 5) vers le haut et en actionnant le levier de réglage (8) vers le haut quand on veut entrainer le coussin du siège (O) au pas premier.

6. Un siège intégré pour enfant (1) selon la revendication 5, **caractérisé par** le levier de réglage (8) levé vers le haut au début et ensuite retiré en avant quand on veut entrainer le coussin du siège (O) du premier pas au deuxième pas.

7. Un siège intégré pour enfant (1) selon la revendication 6, **caractérisé par** l'épingle (23) se déplaçant à l'intérieur du canal (81) par le mouvement causé par le levier de réglage (8).

8. Un siège intégré pour enfant (1) selon la revendication 7, **caractérisé par** la tige inférieure (7) se déplaçant à l'intérieur du canal (21) de la plaque avant (2) et le canal (31) de la plaque arrière (3) simultanément avec le mouvement de l'épingle (23) à l'intérieur du canal (81).

9. Un siège intégré pour enfant (1) selon la revendication 6, **caractérisé par** l'épingle (41) libérée du logement (831) de premier pas, étant soulevé vers le haut et retiré en avant par le mouvement de l'épingle à l'intérieur du canal (81).
